Europäisches Patentamt

European Patent Office

Office européen des brevets

(19)

(11) **EP 0 569 249 B1**

(12) **EUROPEAN PATENT SPECIFICATION**

(45) Date of publication and mention
of the grant of the patent:
**06.08.1997 Bulletin 1997/32**

(51) Int. Cl.$^6$: **C08F 210/16**, C08F 4/611

(21) Application number: **93303550.3**

(22) Date of filing: **07.05.1993**

(54) **Ethylene/alpha-olefin copolymers**

Ethylen-Alpha-Olefin-Copolymerisate

Copolymères éthylène/alpha-oléfines

(84) Designated Contracting States:
**DE FR GB IT NL**

(30) Priority: **08.05.1992 JP 158459/92**

(43) Date of publication of application:
**10.11.1993 Bulletin 1993/45**

(73) Proprietor: **NIPPON OIL COMPANY, LIMITED
Tokyo (JP)**

(72) Inventors:
 • **Matsuura, Kazuo
   Yokohama-shi, Kanagawa-ken (JP)**
 • **Seki, Takashi,
    c/o Nisseki Oosato-Ryo
   Yokohama-shi, Kanagawa-Ken (JP)**
 • **Tajima, Yoshio
   Yokohama-shi, Kanagawa-ken (JP)**
 • **Ikegami, Noboru
   Chigasaki-shi, Kanagawa-ken (JP)**

(74) Representative: **Smaggasgale, Gillian Helen
Mathys & Squire,
100 Grays Inn Road
London WC1X 8AL (GB)**

(56) References cited:
 **EP-A- 0 141 597      EP-A- 0 452 920
 EP-A- 0 492 656      EP-A- 0 495 099
 EP-A- 0 520 811**

EP 0 569 249 B1

**Description**

Background of the Invention

The present invention relates to a novel ethylene/$\alpha$ -olefin copolymer and more particularly to a novel ethylene/$\alpha$ - olefin copolymer superior in melt characteristics such as fluidity and having high impact resistance, mechanical strength, transparency and low-temperature heat sealability.

Recently, there has been an increasing demand for linear low-density polyethylenes superior in mechanical strength as a substitute for high pressure process low-density polyethylenes. At present there are various methods of copolymerizing ethylene and $\alpha$ -olefins, using a Ziegler catalyst, including a vapor phase method and a solution method, and the copolymers obtained by those methods are different in physical properties. Although these copolymers are somewhat wide in molecular weight distribution, they are inferior to high pressure low-density polyethylenes. Further, although their mechanical properties are good, their transparency and heat sealability are still unsatisfactory though improvements have been tried to some extent.

On the other hand, there has been known a method of preparing an ethylene/$\alpha$ -olefin copolymer of a narrow composition distribution by using a catalyst comprising a transition metal compound, e.g. a metallocene compound, and an aluminoxane (Japanese Patent Laid Open No. 19309/1983). However, the resulting copolymer is low in molecular weight and narrow in molecular weight distribution, so is inferior in fluidity and thus involves drawbacks in point of moldability. Although several proposals have been made about widening the molecular weight distribution and increasing the moleuclar weight, they have not reached a satisfactory level yet in point of moldability, including fluidity.

EP-A-0141597 describes a copolymer of ethylene with at least one $C_4$-$C_{20}$ $\alpha$-olefin having the characteristics (A) to (J):

(A) a melt flow rate of from 0.01 to 200 g/10 min.,
(B) a density (d) of from 0.850 to 0.930 g/cm$^3$,
(C) a composition distribution parameter (U) of not more than 50,
(D) the amount of components having a degree of branching of not more than 2/1000 carbons is more than 10% by weight based on the ethylene copolymer,
(E) the amount of components having a degree of branching of at least 30/1000 carbons is not more than 70% by weight based on the ethylene copolymer,
(F) the ratio of the average block methylene chain length to the average methylene chain length is not more than 2.0,
(G) it has n melting points measured by differential scanning calorimeter (DSC) (where n = 1 or n $\geq$ 3), in which the highest melting point ($T_1$) among these DSC melting points is given by the following expression:

$$(175 \times d - 46)°C \leq T_1 \leq 125°C$$

the difference between $T_1$ and the lowest melting point ($T_n$) among the DSC melting point is given by the following expression:

$$18°C < T_1 - T_n \leq 65°C$$

and the difference between $T_1$ and the second highest melting point ($T_2$) is given by the following expression:

$$0°C < T_1 - T_2 \leq 20°C$$

(H) when n $\geq$ 3 in the characteristics (G) above, the ratio of the amount of heat of crystal fusion ($H_1$) at the highest melting point $T_1$ to the total amount of heat of crystal fusion ($H_T$) is given by the following expression:

$$0 < H_1/H_T \leq 0.40$$

(I) a crystallinity of from 15 to 70%, and
(J) a molecular weight distribution Mw/Mn of from 2.5 to 10.

Having made extensive studies for preparing an ethylene/$\alpha$ -copolymer superior in optical properties such as transparency, molding properties such as fluidity, mechanical properties such as impact resistance, tensile strength and tear strength, and low-temperature heat sealability, and having those properties in a well-balanced state, the present inventors discovered a novel ethylene/$\alpha$ -olefin copolymer having specific molecular weight distibution characteristic, DSC melting point characteristic, branching degree characteristic and density and also found out that such specific ethylene/α -olefin copolymer was superior in the above properties and possessed those properties in a well-balanced state. In this way we accomplished the present invention.

Summary of the Invention

The present invention resides in an ethylene/α - olefin copolymer which satisfies the following conditions (a) to (h) :

(a) a melt index of 0.01 to 100 g/10 min. as determined according to ASTM D1238-90b (190°C , load: 2.16 kg) ;
(b) a density of 0.9256 to 0.940 g/cm$^3$ ;
(c) a molecular weight distribution (ratio of weight, average molecular weight to number molecular weight, Mw/Mn) in the range of 2.0 to 15 as determined by gel permeation chromatography (GPC) ;
(d) an N value in the range of 1.25 ≦ N value ≦ 3.0 which N value is defined as follows:

$$N\ value = \frac{\log (\tau^{150}/\tau^{20})}{\log (150/20)}$$

$$\begin{pmatrix} {}^{150} : \text{shear rate (sec}^{-1}) \text{ at } 190°C \text{ and a load of} \\ \Upsilon \ 150 \text{ kgf} \\ {}^{20} : \text{shear rate (sec}^{-1}) \text{ at } 190°C \text{ and a load of} \\ \Upsilon \ 20 \text{ kgf} \end{pmatrix}$$

(e) the above Mw/Mn ratio satisfies the following expression: N value ≥ 1.32 log (Mw/Mn) + 0.86
(f) a melting point (peak temperature) in the range of 70° to 118°C as determined using a differential scanning calorimeter (DSC) which melting point is present in a singular or plural number;
(g) a degree of branching, B, per 1,000 carbon atoms which satisfies the following expression:

$$-710d + 662 \leq B \leq -725d + 686$$

where d represents the density (g/cm$^3$) of the ethylene copolymer; and
(h) the α-olefin which is copolymerized with ethylene is an α-olefin having 4 to 20 carbon atoms.

The ethylene/α-olefin copolymer of the present invention is a quite novel type of copolymer specified by various conditions as mentioned above and it achieves the foregoing object.

The ethylene/α-olefin copolymer is preferably prepared by copolymerizing ethylene with the α-olefin in the presence of a catalyst comprising a transition metal catalyst component and a modified organoaluminun compound obtained by the reaction of an organoaluminum compound and water and containing Al-O-Al bond(s), said transition metal catalyst component being obtained by mutually contacting an organotransition metal comound of a Group IV metal in the Periodic Table, and at least one member selected from organocyclic compounds each having at least two conjugated double bonds and alkali metal salts thereof, and optionally an organic compound of a Group I to Group III element in the Periodic Table, an inorganic compound carrier or an organic polymer carrier.

The ethylene/α-olefin copolymer preferably has a melt index of 0.05-80 g/10min., a density of 0.9256-0.935 g/cm$^3$, a molecular weight distribution of 2.5-10, an N value of 1.4 - 2.7 a peak temperature of 90°-118°C, and a degree of branching of-710d + 662 ≥ B ≥ -725d + 682.

Detailed Description of the Invention

The ethylene/α-olefin copolymer of the present invention is a copolymer comprising an ethylene component and an α-olefin component having 4 to 20 carbon atoms, more particularly an ethylene/α-olefin random copolymer. The α-olefin component is one or a mixture of two or more of α -olefins having 4 to 20, preferably 4 to 12, more preferably 4 to 8, carbon atoms. Examples are butene-1, pentene-1, hexene-1, 4-methyl-pentene-1, heptene-1, octene-1, decene-1, dodecene-1, tetradecene-1 and octadecene-1.

The content of the $\alpha$ -olefin component in the copolymer is not specially limited if only the foregoing various conditions are satisfied, but usually it is in the range of 0.1 to 30 mol%, preferably 0.5 to 20 mol%, more preferably 1 to 10 mol%.

The ethylene/$\alpha$ -olefin copolymer of the present invention has a melt index (MI) in the range of 0.01 to 100 g/10 min., preferably 0.05 to 80 g/10 min., more preferably 0.1 to 50 g/10 min., as determined according to ASTM D1238-90b (190°C , load: 2.16 kg). A value of MI exceeding 100 g/10 min. is not desirable because deterioration will result in point of moldability and mechanical properties such as strength and impact resistance, and an MI value smaller than 0.01 g/10 min. is not desirable, either, because of deteriorated moldability.

The ethylene/$\alpha$ -olefin copolymer of the present invention has a density of 0.9256 to 0.940 g/cm$^3$, If the density is lower than 0.880 g/cm$^3$, heat resistance and transparency will be deteriorated, and if it is higher than 0.940 g/cm$^3$, physical properties such as transparency and heat sealability will be deteriorated. Thus, both such values are not desirable. The density is determined according to ASTM D1505.

The ethylene/$\alpha$ -olefin copolymer of the present invention has a molecular weight distribution (ratio of weight average molecular weight to number average molecular weight, Mw/Mn) in the range of 2.0 to 15, preferably 2.5 to 10, as determined by gel permeation chromatography (GPC). If the Mw/Mn ratio is lower than 2.0, deterioration will result in point of moldability, and if it exceeds 15, gelation or melt fracture will occur more easily. Thus, both such values are not desirable.

The ethylene/$\alpha$ -olefin copolymer of the present invention has an N value, which is defined as follows (though how to measure it will be described later) in the range of 1.25 $\leqq$ N value $\leqq$ 3.0, preferably 1.25 $\leqq$ N value $\leqq$ 2.5, more preferably 1.4 $\leqq$ N value $\leqq$ 2.7, still more preferably 1.4 $\leqq$ N value $\leqq$ 2.5:

$$N \text{ value} = \frac{\log (\tau^{150}/\tau^{20})}{\log (150/20)}$$

$\gamma^{150}$ : shear rate (sec$^{-1}$) at 190°C and a load of 150 kgf
$\gamma^{20}$ : shear rate (sec$^{-1}$) at 190°C and a load of 20 kgf

If the N value is smaller than 1.25, moldability will be poor, and if it exceeds 3.0, transparency and mechanical strength will be deteriorated, so both such values are not desirable.

It is necessary that the aforesaid Mw/Mn ratio and N value of the ethylene/$\alpha$ -olefin copolymer of the present invention should satisfy the following condition:

$$N \text{ value} \geqq 1.32 \log(Mw/Mn) + 0.86$$

If this condition is not satisfied, deterioration may result in point of moldability, transparency and mechanical strength.

The ethylene/$\alpha$ -olefin copolymer of the present invention has a peak temperature (melting point) in the range of 70° to 118°C , preferably 90° to 118°C , as determined using a differential scanning calorimeter (DSC). Besides, a singular or plural number of substantial peaks (melting points) are present. Even if plural melting points are present the range between maximum and minimum temperatures is 70° to 118°C , more preferably 90° to 118°C . If the copolymer has a melting point lower than 70°C , it will be inferior in heat resistance, and if the copolymer has a melting point higher than 120°C , its transparency will be poor, so both such cases are undesirable.

The ethylene/$\alpha$ -olefin copolymer has a degree of branching, B, per 1,000 carbon atoms which falls under the following range:

$$-710d + 662 \leqq B \leqq -725d + 686$$

where d represents the density (g/cm$^3$) of the ethylene copolymer, preferably

$$-710d + 662 \leqq B \leqq -725d + 682$$

where d is as defined above. If the value of B is smaller than (-710d + 662), transparency will be poor, and if it exceeds (-725d + 686), heat resistance will be low; besides, stickiness is apt to occur which is ascribable to the portion of a low molecular weight component. The values of B described herein were obtained from the results of $^{13}$C-NMR measurement is accordance with J.C. Randier et al., Chemical Physics C29 (2 & 3), 201-317 (1987) and Macromolecules, 21.

The ethylene/$\alpha$ -olefin copolymer of the present invention satisfies the above conditions, but in order to further enhance the effect of the present invention, it is more preferable for the copolymer to satisfy the following two conditions.

Firstly, when the ethylene/$\alpha$ -olefin copolymer is pressed into sheet of 0.5 ± 0.01 mm, a haze value as determined according to the method described in ASTM D1003-61 should usually be not larger than 60 %, preferably not larger than 55 % and more preferably not larger than 50 %.

Secondly, an eluted component quantity at 95°C or higher in temperature rising elution fractionation (how to measure will be described later) should usually be not larger than 5 %, preferably not larger than 3 %, and a soluble matter content at 25°C or lower should usually be not higher than 2 %, preferably not higher than 1 %.

Such specific ethylene/α -olefin copolymer of the present invention can be prepared, for example, by a method wherein ethylene and an α -olefin are copolymerized in the presence of a catalyst comprising a transition metal catalyst component and a promotor component typical of which is a modified organoaluminum compound obtained by the reaction of an organoaluminum compound and water and containing Al-O-Al bond, the said transition metal catalyst component being obtained by contacting an organotransition metal compound of a Group IV metal in the Periodic Table and an organocyclic compound having at least two conjugated double bonds and/or an alkali metal salt thereof, further, if desired, an organic compound of a Group I to Group III element in the Periodic Table, or an inorganic compound carrier or an organic polymer carrier.

As examples of the organotransition metal compound of a Group IV metal in the Periodic Table there are mentioned compounds of the general formula $Me^1R^1_nX^1_{4-n}$ where $R^1$ is a hydrocarbon residue (group) having 1 to 24, preferably 1 to 12, more preferably 1 to 8 carbon atoms, examples of which are alkyl groups such as methyl, ethyl, propyl, buty, pentyl, hexyl and octyl, alkenyl groups such as vinyl and allyl, aryl groups such as phenyl, tolyl and xylyl, aralkyl groups such as benzyl, phenethyl, styryl and neophyl, alkoxy groups such as methoxy, ethoxy, propoxy, butoxy and pentyloxy, aryloxy groups such as phenoxy and tolyloxy, and aralkyloxy groups such as benzyloxy, $X^1$ is a halogen atom such as fluorine, iodine, chlorine or bromine, $Me^1$ is Zr, Ti or Hf, preferably Zr, and n is $0 \leqq n \leqq 4$, preferably $0 < n \leqq 4$. These compounds may be used as a mixture of two or more thereof.

More concrete examples of the organotransition metal compound include tetramethyl zirconium, tetraethyl zirconium, tetrapropyl zirconium, tetra-n-butyl zirconium, tetrapentyl zirconium, tetraphenyl zirconium, tetratolyl zirconium, tetrabenzyl zirconium, tetramethoxy zirconium, tetraethoxy zirconium, tetrapropoxy zirconium, tetrabutoxy zirconium, tetraphenoxy zirconium, tetratolyloxy zirconium, tetrapentyloxy zirconium, tetrabenzyloxy zirconium, tetraallyl zirconium, tetraneophyl zirconium, trimethylmonochloro zirconium, triethylmonochloro zirconium, tripropylmonochloro zirconium, tri-n-butylmonochloro zirconium, tribenzylmonochloro zirconium, dimethyldichloro zirconium, diethyldichloro zirconium, di-n-butyldichloro zirconium, dibenzyldichloro zirconium, monomethyltrichloro zirconium, monoethyltrichloro zirconium, mono-n-butyltrichloro zirconium, monobenzyltrichloro zirconium, tetrachloro zirconium, trimethoxymonochloro zirconium, dimethoxydichloro zirconium, monomethoxytrichloro zirconium, tetraethoxy zirconium, triethoxymonochloro zirconium, diethoxydichloro zirconium, monoethoxytrichloro zirconium, triisopropoxymonochloro zirconium, diisopropoxydichloro zirconium, monoisopropoxytrichloro zirconium, tetra-n-butoxy zirconium, tri-n-butoxymonochloro zirconium, di-n-butoxydichloro zirconium, mono-n-butoxytrichloro zirconium, tripentoxymonochloro zirconium, dipentoxydichloro zirconium, monopentoxy trichloro zirconium, triphenoxymonochloro zirconium, diphenoxydichloro zirconium, monophenoxytrichloro zirconium, tritolyloxymonochloro zirconium, ditolyloxydichloro zirconium, monotolyloxytrichloro zirconium, tribenzyloxymonochloro zirconium, dibenzyloxydichloro zirconium, monobenzyloxytrichloro zirconium, tripropylmonobromo zirconium, tri-n-butylmonobromo zirconium, trimethylmonobromo zirconium, triethylmonobromo zirconium, tribenzylmonobromo zirconium, dimethyldibromo zirconium, diethyldibromo zirconium, di-n-butyldibromo zirconium, dibenzyldibromo zirconium, monomethyltribromo zirconium, monoethyltribromo zirconium, mono-n-butyltribromo zirconium, monobenzyltribromo zirconium, tetrabromo zirconium, trimethoxymonobromo zirconium, dimethoxydibromo zirconium, monomethoxytribromo zirconium, triethoxymonobromo zirconium, diethoxydibromo zirconium, monoethoxytribromo zirconium, triisopropoxymonobromo zirconium, diisopropoxydibromo zirconium, monoisopropoxytribromo zirconium, tri-n-butoxymonobromo zirconium, di-n-butoxydibromo zirconium, mono-n-butoxytribromo zirconium, tripentoxymonobromo zirconium, dipentoxydibromo zirconium, monopentoxytribromo zirconium, triphenoxymonobromo zirconium, diphenoxydibromo zirconium, monophenoxytribromo zirconium, tritolyloxymonobromo zirconium, ditolyloxydibromo zirconium, monotolyloxytribromo zirconium, tribenzyloxymonobromo zirconium, dibenzyloxydibromo zirconium, monobenzyloxytribromo zirconium, trimethylmonoiodo zirconium, triethylmonoiodo zirconium, tripropylmonoiodo zirconium, tri-n-butylmonoiodo zirconium, tribenzylmonoiodo zirconium, dimethyldiiodo zirconium, diethyldiiodo zirconium, di-n-butyldiiodo zirconium, dibenzyldiiodo zirconium, monomethyltriiodo zirconium, monoethyltriiodo zirconium, mono-n-butyltriiodo zirconium, monobenzyltriiodo zirconium, tetraiodo zirconium, trimethoxymonoiodo zirconium, dimethoxymonoiodo zirconium, monomethoxytriiodo zirconium, triethoxydiiodo zirconium, diethoxydiiodo zirconium, monoethoxytriiodo zirconium, triisopropoxymonoiodo zirconium, diisopropoxydiiodo zirconium, monoisopropoxytriiodo zirconium, tri-n-butoxymonoiodo zirconium, di-n-butoxydiiodo zirconium, mono-n-butoxytriiodo zirconium, tripentoxymonoiodo zirconium, dipentoxydiiodo zirconium, monopentoxytriiodo zirconium, triphenoxymonoiodo zirconium, diphenoxydiiodo zirconium, monophenoxytriiodo zirconium, tritolyloxymonoiodo zirconium, ditolyloxydiiodo zirconium, monotolyloxytriiodo zirconium, tribenzyloxymonoiodo zirconium, dibenzyloxydiiodo zirconium, monobenzyloxytriiodo zirconium, tetramethyl titanium, tetraethyl titanium, tetrapropyl titanium, tetra-n-butyl titanium, tetrapentyl titanium, tetraphenyl titanium, tetratolyl titanium, tetrabenzyl titanium, tetramethoxy titanium, tetraethoxy titanium, tetrapropoxy titanium, tetrabutoxy titanium, tetraphenoxy titanium, tetratolyloxy titanium, tetrapentyloxy titanium, tetrabenzyloxy titanium, tetraallyl titanium, tetraneophyl titanium, trimethylmonochloro titanium, triethylmonochloro titanium, tripropylmonochloro titanium, tri-n-butylmonochloro titanium, tribenzylmonochloro titanium, dimethyldichloro titanium, diethyldichloro titanium, di-n-butyldichloro titanium, dibenzyldichloro titanium, monomethyltrichloro titanium, monoethyltrichloro titanium, mono-n-butyltrichloro titanium, monobenzyltrichloro titanium, tetrachloro titanium, trimethoxymonochloro titanium, dimethoxydichloro titanium, dimethoxydichloro titanium, monomethoxytrichloro titanium, tetraethoxy titanium, triethoxymonochloro titanium, diethoxydichloro titanium, monoethoxytrichloro titanium, triisopropoxymonochloro titanium, diisopropoxydichloro titanium, monoisopropoxytrichloro titanium, tetra-n-butoxy titanium, tri-n-butoxymonochloro titanium, di-n-butoxydichloro titanium, mono-n-butoxytrichloro titanium, tripentoxymonochloro titanium, dipentoxydichloro titanium, monopentoxytrichloro titanium, triphenoxymonochloro titanium, diphenoxydichloro titanium, monophenoxytrichloro titanium, tritolyloxymonochloro titanium, ditolyloxydichloro titanium, monotolyloxytrichloro titanium, tribenzyloxymonochloro titanium, dibenzyloxydichloro titanium, monobenzyloxytrichloro titanium, triethylmonobromo titanium, tripropylmonobromo titanium, tri-n-butylmonobromo titanium, tribenzylmonobromo titanium, dimethyldibromo titanium, diethyldibromo titanium, di-n-butyldibromo titanium, dibenzyldibromo titanium, monomethyltribromo titanium, monoethyltribromo titanium, mono-n-butyltribromo titanium, monobenzyltribromo titanium, tetrabromo titanium, trimethoxymonobromo titanium, dimethoxydibromo titanium, monomethoxytribromo titanium, triethoxymonobromo titanium, diethoxydibromo titanium, monoethoxytribromo titanium, triisopropoxymonobromo titanium, diisopropoxydibromo titanium, monoisopropoxytribromo titanium, tri-n-butoxymonobromo titanium, di-n-butoxydibromo titanium, mono-n-butoxytribromo titanium, tripentoxymonobromo titanium, dipentoxydibromo titanium, monopentoxytribromo titanium, triphenoxymonobromo titanium, diphenoxydibromo titanium, monophenoxytribromo titanium, tritolyloxymonobromo titanium, ditolyloxydibromo titanium, monotolyloxytribromo titanium, tribenzyloxymonobromo titanium, dibenzyloxydibromo titanium, monobenzyloxytribromo titanium, trimethylmonoiodo titanium, triethylmonoiodo titanium, tripropylmonoiodo titanium, tri-n-butylmonoiodo titanium, tribenzylmonoiodo titanium, dimethyldiiodo titanium, diethyldiiodo titanium, di-n-butyldiiodo titanium, dibenzyldiiodo titanium, monomethyltriiodo titanium, monoethyltriiodo titanium, mono-n-butyltriiodo titanium, monobenzyltriiodo titanium, tetraiodo titanium, trimethoxymonoiodo titanium, dimethoxydiiodo titanium, monomethoxytriiodo titanium, triethoxymonoiodo titanium, diethoxydiiodo titanium, monoethoxytriiodo titanium, triisopropoxymonoiodo titanium, diisopropoxydiiodo titanium, monoisopropoxytriiodo titanium, tri-n-butoxymonoiodo titanium, di-n-butoxydiiodo titanium, mono-n-butoxytriiodo titanium, tripentoxymonoiodo titanium, dipentoxydiiodo titanium, monopentoxytriiodo titanium, triphenoxymonoiodo titanium, diphenoxydiiodo titanium, monophenoxytriiodo titanium, tritolyloxymonoiodo titanium, ditolyloxydiiodo titanium, monotolyloxytriiodo titanium, tribenzyloxymonoiodo titanium, dibenzyloxydiiodo titanium, monobenzyloxytriiodo titanium, tetramethyl hafnium, tetraethyl hafnium, tetrapropyl hafnium; tetra-n-butyl hafnium, tetrapentyl hafnium, tetraphenyl hafnium, tetratolyl hafnium, tetrabenzyl hafnium, tetramethoxy hafnium, tetraethoxy hafnium, tetrapropoxy hafnium, tetrabutoxy hafnium, tetraphenoxy hafnium, tetratolyloxy hafnium, tetrapentyloxy hafnium, tetrabenzyloxy hafnium, tetraallyl hafnium, tetraneophyl hafnium, trimethylmonochloro hafnium, triethylmonochloro hafnium, tripropylmonochloro hafnium, tri-n-butylmonochloro hafnium, tribenzylmonochloro hafnium, dimethyldichloro hafnium, diethyldichloro hafnium, di-n-butyldichloro hafnium, dibenzyldichloro hafnium, monomethyltrichloro hafnium, monoethyltrichloro hafnium, mono-n-butyltrichloro hafnium, monobenzyltrichloro hafnium, tetrachloro hafnium, trimethoxymonochloro hafnium, dimethoxydichloro hafnium, monomethoxytrichloro hafnium, tetraethoxy hafnium, triethoxymonochloro hafnium, diethoxydichloro hafnium, monoethoxytrichloro hafnium, triisopropoxymonochloro hafnium, diisopropoxydichloro hafnium, monoisopropoxytrichloro hafnium, tetra-n-butoxy hafnium, tri-n-butoxymonochloro hafnium, di-n-butoxydichloro hafnium, mono-n-butoxytrichloro hafnium, tripentoxymonochloro hafnium, dipentoxydichloro hafnium, monopentoxytrichloro hafnium, triphenoxymonochloro hafnium, diphenoxydichloro hafnium, monophenoxytrichloro hafnium, tritolyloxymonochloro hafnium, ditolyloxydichloro hafnium, monotolyloxytrichloro hafnium, tribenzyloxymonochloro hafnium, dibenzyloxydichloro hafnium, monobenzyloxytrichloro hafnium, trimethylmonobromo hafnium, triethylmonobromo hafnium, tripropylmonobromo hafnium, tri-n-butylmonobromo hafnium, tribenzylmonobromo hafnium, dimethyldibromo hafnium, diethyldibromo hafnium, di-n-butyldibromo hafnium, dibenzyldibromo hafnium, monomethyltribromo hafnium, monoethyltribromo hafnium, mono-n-butyltribromo hafnium, monobenzyltribromo hafnium, tetrabromo hafnium, trimethoxymonobromo hafnium, dimethoxydibromo hafnium, monomethoxytribromo hafnium, triethoxymonobromo hafnium, diethoxydibromo hafnium, monoethoxytribromo hafnium, triisopropoxymonobromo hafnium, diisopropoxydibromo hafnium, monoisopropoxytribromo hafnium, tri-n-butoxy monobromo hafnium, di-n-butoxydibromo hafnium, mono-n-butoxytribromo hafnium, tripentoxymonobromo hafnium, dipentoxydibromo hafnium, monopentoxytribromo hafnium, triphenoxymonobromo hafnium, diphenoxydibromo hafnium, monophenoxytribromo hafnium, tritolyloxymonobromo hafnium, ditolyloxydibromo hafnium, monotolyloxytribromo hafnium, tribenzyloxymonobromo hafnium, dibenzyloxydibromo hafnium, monobenzyloxytribromo hafnium, trimethylmonoiodo hafnium, triethylmonoiodo hafnium, tripropylmonoiodo hafnium, tri-n-butylmonoiodo hafnium, tribenzylmonoiodo hafnium, dimethyldiiodo hafnium, diethyldiiodo hafnium, di-n-butyldiiodo hafnium, dibenzyldiiodo hafnium, monomethyltriiodo hafnium, monoethyltriiodo hafnium, mono-n-butyltriiodo hafnium, monobenzyltriiodo hafnium, tetraiodo hafnium, trimethoxymonoiodo hafnium, dimethoxydiiodo hafnium, monomethoxytriiodo hafnium, triethoxymonoiodo hafnium, diethoxydiiodo hafnium, monoethoxytriiodo hafnium, triisopropoxymonoiodo hafnium, diisopropoxydiiodo hafnium, monoisopropoxytriiodo hafnium, tri-n-butoxymonoiodo hafnium, di-n-butoxydiiodo hafnium, mono-n-butoxytriiodo hafnium, tripentoxymonoiodo hafnium, dipentoxydiiodo hafnium, monopentoxytriiodo hafnium, triphenoxymonoiodo hafnium, diphenoxydiiodo hafnium, monophenoxytriiodo hafnium, tritolyloxymonoiodo hafnium, ditolyloxydiiodo hafnium, monotolyloxytriiodo hafnium, tribenzyloxymonoiodo hafnium, dibenzyloxydiiodo hafnium, and monobenzyloxytriiodq hafnium.

Particularly, tetramethylzirconium, tetraethylzirconium, tetrabenzylzirconium, tetrapropoxyzirconium, tetrabutoxyziconium and tetrachlorozirconium are preferred. More preferred are transition metal compounds having alkoxy groups such as tetrapropoxyzirconium and tetrabutoxyzirconium. These compounds may be used as a mixture of two or more.

Particularly, the use of a tetraalkoxyzirconium compound brings about advantages, e.g. good fluidity (large N value), despite a high molecular weight and narrow molecular weight distribution of the resulting polymer. The use of a zirconium halide affords a polymer whose molecular weight is lower than that of a polymer obtained by using a tetraalkoxyzirconium compound. That is, a combined use of both tetraalkoxyzirconium compound and zirconium halide can afford a polymer having an optionally controlled molecular weight distribution.

The organocyclic compound having at least two conjugated double bonds is, for example, a cyclic hydrocarbon having 4 to 24, preferably 4 to 12, carbon atoms per molecule and having two or more, preferably 2 to 4, more preferably 2 to 3, conjugated double bonds. Examples are $C_7$-$C_{24}$ aralkylene, cyclopentadiene, substituted cyclopentadiene indene, fluorene, substituted fluorene, cycloheptatriene, substituted cycloheptatriene, cyclooctatetraene, substituted cyclooctatetraene, further, silicon compounds containing a cyclic hydrocarbon group having two or more conjugated double bonds, such as cyclopentadienyl, substituted cyclopentadienyl, indenyl and substituted indenyl, as well as alkali metal salts thereof such as lithium and sodium salts. As examples of substituent groups in such substituted compounds there are mentioned $C_1$-$C_{12}$ alkyl groups such as methyl, ethyl and butyl, aryl groups such as phenyl, tolyl and xylyl, and aralkyl groups such as benzyl. Compounds with any of these compounds bonded through an alkylene group having usually 2 to 8, preferably 2 to 3, carbon atoms. As examples of such silicon compounds there are mentioned those represented by the general formula $(Cy)_L \, SiR^3{}_{4-L}$ where Cy represents cyclopentadienyl, substituted cyclopentadienyl, indenyl or substituted indenyl (the substituent groups are as mentioned above), $R^3$ is a hydrocarbon group having 1 to 24, preferably 1 to 12, carbon atoms, examples of which are alkyl groups such as methyl, ethyl, propyl, iso-propyl, butyl, t-butyl, hexyl and octyl, alkoxy groups such as methoxy, ethoxy, propoxy and butoxy, aryl groups such as phenyl, aryloxy groups such as phenoxy, and aralkyl groups such as benzyl, or $R^3$ represents a hydrogen atom, and L is $1 \leqq L \leqq 4$, preferably $1 \leqq L \leqq 3$, more preferably $1 \leqq L < 3$.

More concrete examples of the organocyclic compound having two or more conjugated double bonds are cyclopentadiene, methylcyclopentadiene, ethylcyclopentadiene, t-butylcyclopentadiene, hexylcyclopentadiene, octylcyclopentadiene, 1,2-dimethylcyclopentadiene, 1,3-dimethylcyclopentadiene, 1,2,4-trimethylcyclopentadiene, 1,2,3,4-tetramethylcyclopentadiene, pentamethylcyclopentadiene, indene, 4-methyl-1-indene, 4,7-dimethylindene, 4,5,6,7-tetrahydroindene, fluorene, methylfluorene, cycloheptatriene, methylcycloheptatriene, cyclooctatetraene, methylcyclooctatetraene, bisindenylethane, bis(4,5,6,7-tetrahydro-1-indenyl)ethane, 1,3-propanedinylbisindene, 1,3-propandinylbis(4,5,6,7-tetrahydro)indene, propylenebis(1-indene), isopropyl(1-indenyl)cyclopentadiene, diphenylmethylene(9-fluorenyl)cyclopentadiene, isopropylcyclopentadienyl-1-fluorene, monoindenylsilane, diindenylsilane, triindenylsilane, tetraindenylsilane, monoindenylmonomethylsilane, monoindenylmonoethylsilane, monoindenyldimethylsilane, monoindenyldiethylsilane, monoindenyltrimethylsilane, monoindenyltriethylsilane, monoin-denylmonomethoxysilane, monoindenylmonoethoxysilane, monoindenylmonophenoxysilane, diindenylmonomethylsi-lane, diindenylmonoethylsilane, diindenyldimethylsilane, diindenyldiethylsilane, diindenylmethylethylsilane, diindenyldipropylsilane, diindenylethylpropylsilane, diindenylphenylsilane, diindenylphenylmethylsilane, diindenylmono-methoxysilane, diindenylmonoethoxysilane, triindenylmonomethylsilane, triindenylmonoethylsilane, triindenylmono-methoxysilane, triindenylmonoethoxysilane, 4,5,6,7-tetrahydro-1-indenylsilane, 4-methyl-1-indenylsilane, 6-methyl-1-indenylsilane, bis-4,5,6,7-tetrahydro-1-indenylsilane, bis-4-methyl-1-indenylsilane, bis-5-methyl-1 indenylsilane, bis-6-methyl-1-indenylsilane, 4,5,6,7-tetrahydro-1-indenylmethylsilane, 4-methyl-1-indenylmethylsilane, 5-methyl-1-indenylmethylsilane, 6-methyl-1-indenylmethylsilane, 4,5,6,7-tetrahydro-1-indenyldimethylsilane, 4-methyl-1-indenyldimethylsilane, 5-methyl-1-indenyldimethylsilane, 6-methyl-1-indenyldimethylsilane, monophenylcyclopentadiene, benzylcyclopentadiene, monocyclopentadienylsilane, dicyclopentadienylsilane, tricyclopentadienylsilane, tetracy-clopentadienylsilane, monocyclopentadienylmonomethylsilane, monocyclopentadienylmonoethylsilane, monocy-clopentadienyldimethylsilane, monocyclopentadienyldiethylsilane, monocyclopentadienyltrimethylsilane, monocyclopentadienyltriethylsilane, monocyclopentadienylmonomethoxysilane, monocyclopentadienylmonoethox-ysilane, monocyclopentadienylmonophenoxysilane, dicyclopentadienylmonomethylsilane, dicyclopentadienylmo-noethylsilane, dicyclopentadienyldimethylsilane, dicyclopentadienyldiethylsilane, dicyclopentadienylmethylethylsilane, dicyclopentadienyldipropylsilane, dicyclopentadienylethylpropylsilane, dicyclopentadienyldiphenylsilane, dicyclopenta-dienylphenylsilane, dicyclopentadienylmonomethoxysilane, dicyclopentadienylmonoethoxysilane, tricyclopentadienyl-monomethylsilane, tricyclopentadienylmonoethylsilane, tricyclopentadienylmonomethoxysilane, tricyclopentadienylmonoethoxysilane, 3-methylcyclopentadienylsilane, bis-3-methylcyclopentadienylsilane, 3-methylcyclopentadienylmethylsilane, 1,2-dimethylcyclopentadienylsilane, 1,3-dimethylcyclopentadienylsilane, 1,2,4-trimethylcyclopentadienylsilane, 1,2,3,4-tetramethylcyclopentadienylsilane, and pentamethylcyclopentadienylsilane.

Particularly, by using plural kinds of organocyclic compounds having at least two conjugated double bonds, the specific copolymer of the present invention can be obtained easily.

As examples of the organic compound of a Group I to Group III element in the Periodic Table there are mentioned those represented by the general formula $Me^2R^2{}_mX^2{}_{z-m}$ where $R^2$ is a hydrocarbon group having 1 to 24, preferably 1 to 12, more preferably 1 to 8, carbon atoms, examples of which include alkyl groups such as methyl, ethyl, propyl, isopropyl, butyl, pentyl, hexyl, octyl, decyl and dodecyl, alkenyl groups such as vinyl and allyl, aryl groups such as phenyl, tolyl and xylyl, and aralkyl groups such as benzyl, phenethyl and styryl, $X^2$ is an alkoxy group having 1 to 12, preferably 1 to 6, carbon atoms, examples of which include methoxy, ethoxy, propoxy and butoxy, or a halogen atom of fluorine, iodine, chlorine or bromine, $Me^2$ represents an element of Groups I to III in the Periodic Table, examples of which include lithium, sodium, potassium, magnesium, calcium, zinc, boron and aluminum, z represents the valence of $Me^2$, and m is a number in the range of $0 < m \leqq 3$, preferably $0 < m < 3$, provided m satisfies the relation of $m \leqq z$.

Examples include methyl lithium, ethyl lithium, n-propyl lithium, isopropyl lithium, n-butyl lithium, t-butyl lithium, pentyl lithium, octyl lithium, phenyl lithium, benzyl lithium, dimethyl magnesium, diethyl magnesium, di-n-propyl magnesium, diisopropyl magnesium, di-n-butyl magnesium, di-t-butyl magnesium, dipentyl magnesium, dioctyl magnesium, diphenyl magnesium, dibenzyl magnesium, methyl magnesium chloride, ethyl magnesium chloride, isopropyl magnesium chloride, n-propyl magnesium chloride, n-butyl magnesium chloride, t-butyl magnesium chloride, pentyl magnesium chloride, octyl magnesium chloride, phenyl magnesium chloride, benzyl magnesium chloride, methyl magnesium bromide, methyl magnesium iodide, ethyl magnesium bromide, ethyl magnesium iodide, isopropyl magnesium bromide, isopropyl magnesium iodide, n-propyl magnesium bromide, n-propyl magnesium iodide, n-butyl magnesium bromide, n-butyl magnesium iodide, t-butyl magnesium bromide, t-butyl magnesium iodide, pentyl magnesium bromide, pentyl magnesium iodide, octyl magnesium bromide, octyl magnesium iodide, phenyl magnesium bromide, phenyl magnesium iodide, dimethyl zinc, diethyl zinc, di-n-propyl zinc, di-isopropyl zinc, di-n-butyl zinc, di-t-butyl zinc, dipentyl zinc, dioctyl zinc, diphenyl zinc, dibenzyl zinc, trimethyl boron, triethyl boron, tri-n-propyl boron, triisopropyl boron, tri-n-butyl boron, tri-t-butyl boron, tripentyl boron, trioctyl boron, triphenyl boron, tribenzyl boron, trimethyl aluminum, triethyl aluminum, diethyl aluminum chloride, diethyl aluminum bromide, diethyl aluminum fluoxide, diethyl aluminum iodide, ethyl aluminum dichloride, ethyl aluminum dibromide, ethyl aluminum difluoride, ethyl aluminum diiodide, tripropyl aluminum, dipropyl aluminum chloride, dipropyl aluminum bromide, dipropyl aluminum fluoride, dipropyl aluminum iodide, propyl aluminum dichloride, propyl aluminum dibromide, propyl aluminum difluoride, propyl aluminum diiodide, triisopropyl aluminum, diisopropyl aluminum chloride, diisopropyl aluminum bromide, diisopropyl aluminum fluoride, diisopropyl aluminum iodide, ethyl aluminum sesquichloride, ethyl aluminum sesquibromide, propyl aluminum sesquichloride, propyl aluminum sesquibromide, n-butyl aluminum sesquichroride, n-butyl aluminum sesquibromide, isopropyl aluminum dichloride, isopropyl aluminum dibromide, isopropyl aluminum difluoride, isopropyl aluminum diiodide, tributyl aluminum, dibutyl aluminum chloride, dibutyl aluminum bromide, dibutyl aluminum fluoride, dibutyl aluminum iodide, butyl aluminum dichloride, butyl alminum dibromide, butyl aluminum difluoride, butyl aluminum diiodide, tri-sec-butyl aluminum, di-sec-butyl aluminum chloride, di-sec-butyl aluminum bromide, di-sec-butyl aluminum fluoride, di-sec-butyl aluminum iodide, sec-butyl aluminum dichloride, sec-butyl aluminum dibromide, sec-butyl aluminum difluoride, sec-butyl aluminum diiodide, tri-t-butyl aluminum, di-t-butyl aluminum chloride, di-t-butyl aluminum bromide, di-t-butyl aluminum fluoride, di-t-butyl aluminum idodide, t-butyl aluminum dichloride, t-butyl aluminum dibromide, t-butyl aluminum difluoride, t-butyl aluminum diiodide, triisobutyl aluminum, diisobutyl aluminum chloride, diisobutyl aluminum bromide, diisobutyl aluminum fluoride, diisobutyl aluminum idodide, isobutyl aluminum dichloride, isobutyl aluminum dibromide, isobutyl aluminum difluoride, isobutyl aluminum diiodide, trihexyl aluminum, dihexyl aluminum chloride, dihexyl aluminum bromide, dihexyl aluminum fluoride, dihexyl aluminum iodide, hexyl aluminum dichloride, hexyl aluminum dibromide, hexyl aluminum difluoride, hexyl aluminum diiodide, tripentyl aluminum, dipentyl aluminum chloride, dipentyl aluminum bromide, dipentyl aluminum fluoride, dipentyl aluminum iodide, pentyl aluminum dichloride, pentyl aluminum dibromide, pentyl aluminum difluoride, pentyl aluminum diiodide, methyl aluminum methoxide, methyl aluminum ethoxide, methyl aluminum propoxide, methyl aluminum butoxide, dimethyl aluminum methoxide, dimethyl aluminum ethoxide, dimethyl aluminum butoxide, ethyl aluminum methoxide, ethyl aluminum ethoxide, ethyl aluminum propoxide, ethyl aluminum butoxide, diethyl aluminum methoxide, diethyl aluminum ethoxide, diethyl aluminum propoxide, diethyl aluminum butoxide, propyl aluminum methoxide, propyl aluminum ethoxide, propyl aluminum propoxide, propyl aluminum butoxide, dipropyl aluminum methoxide, dipropyl aluminum ethoxide, dipropyl aluminum propoxide, dipropyl aluminum butoxide, butyl aluminum methoxide, butyl aluminum ethoxide, butyl aluminum propoxide, butyl aluminum butoxide, dibutyl aluminum methoxide, dibutyl aluminum ethoxide, dibutyl aluminum propoxide, and dibutyl aluminum butoxide.

The inorganic compound carrier and the organic polymer both referred to previously are not specially limited if only they have a basic shape which can be retained in the catalyst preparation stage.

As exmples of the inorganic compound carrier there are mentioned metals, oxides, chlorides, carbonates or carbonaceous materials and mixtures thereof, and examples of its shapes include powdery, granular, flaky, foil-like and fibrous shapes. Prior to use, the inorganic compound carrier is calcined in air or in an atmosphere of an inert gas such as nitrogen or argon, usually at a temperature of 200°C to 900°C . Although the carriers exemplified above are different in kind and properties, they are used in a shape having a maximum length of usually 5 to 200 $\mu$m, preferably 10 to 100$\mu$m. Physical properties of the inorganic compound carrier used in the present invention are not specially limited, but a porous carrier is preferred, usually having a surface area of 50 to 1000 m$^2$/g and a pore volume of 0.05 to 3 cm$^3$/g.

As suitable examples of metals employable as such inorganic carriers there are mentioned iron, aluminum and nickel. As examples of oxides there are mentioned sole oxides and double oxides of Group I to Group VIII elements in the Periodic Table. More concrete examples include $SiO_2$, $Al_2O_3$, MgO, Cao, $B_2O_3$, $TiO_2$, $ZrO_2$, $Fe_2O_3$, $SiO_2 \cdot Al_2O_3$, $Al_2O_3 \cdot MgO$, $Al_2O_3 \cdot CaO$, $Al_2O_3 \cdot MgO \cdot CaO$, $Al_2O_3 \cdot MgO \cdot SiO_2$, $Al_2O_3 \cdot CuO$, $Al_2O_3 \cdot Fe_2O_3$, $Al_2O_3 \cdot NiO$, and $SiO_2 \cdot MgO$. These formulae are not molecular formulae but represent only compositions. The structure and component ratio of double oxides employable in the present invention are not specially limited. As a matter of course, moreover, various oxides employable in the present invention may be in a slightly water-adsorbed state or may contain a small amount of impurities.

As preferred examples of chlorides employable in the invention there are mentioned chlorides of alkali metals and alkaline earth metals, with $MgCl_2$ and $CaCl_2$ being particularly preferred.

As preferred examples of carbonates employable in the invention there are mentioned carbonates of alkali metals alkaline earth metals, with magnesium carbonate, calcium carbonate and barium carbonate being particularly preferred. As examples of carbonaceous materials employable in the invention there are mentioned carbon black and active carbon.

The above examples of inorganic carriers are suitable examples empolyable in the present invention, but the use of oxides is particularly preferred.

On the other hand, the particulate polymer carrier employable in the invention is not specially limited if only it can retain its solid state without melting during polymerization reaction and catalyst preparation. Any of thermoplastic resins and thermosetting resins is employable.

Examples are particulate polyolefins (preferably having 2 to 12 carbon atoms) typical of which are ethylene polymers, ethylene/$\alpha$ -olefin copolymers, propylene polymers or copolymers and poly-1-butene, as well as polyesters, polyamides, polyvinyl chloride, polymethyl methacrylate, polymethyl acrylate, polystyrene, polynorbornene, various natural polymers, and mixtures thereof. The particulate polymer carrier employable in the invention has a particle diameter of usually 5 to 2000 $\mu$m, preferably 10 to 1500 $\mu$m, though its properties differ depending on the kind thereof and how to prepare it. The molecular weight of the polymer carrier is not specially limited and it can range from low to ultra-high molecular weight if only it permits the polymer carrier to be present as a solid substance.

Of course, the inorganic compound carrier, the particulate polymer carrier or the inorganic compound carrier and the particulate polymer carrier may be used as they are, but may also be used after being contacted with an organoaluminum compound such as trimethylaluminum, triethylaluminum, triisobutylaluminum, tri-n-hexylaluminum, dimethylaluminum chloride, diethylaluminum chloride or diethylmonoethoxyaluminum, or a modified organoaluminum compound (to be described later) obtained by the reaction of an organoaluminum compound and water and containing Al-O-Al bond, or a silane compound. It is also preferable that the inorganic carrier be contacted, before use, with an active hydrogen-containing compound such as alcohol or aldehyde, an electron donating compound such as ester or ether, or an alkoxide group-containing compound such as tetraalkoxy silicate, tetraalkoxyaluminum or a transition metal tetraalkoxide. As an example of a method for such pre-contact treatment there is mentioned a method in which the contact is performed in an atmosphere of an inert gas such as nitrogen or argon, in the presence of a liquid inert hydrocarbon, for example an aromatic hydrocarbon (usually having 6 to 12 carbon atoms) such as benezene, toluene, xylene or ethylbenzene or such an aliphatic or alicyclic hydrocarbon (usually having 5 to 12 carbon atoms) such as heptane, hexane, decane, dodecane or cyclohexane., with or without stirring. In this case, the treatment may be carried out at a temperature of usually -100 °C to 200°C , preferably -50°C to 100°C , for 30 minutes to 50 hours, preferably 1 to 24 hours. It is preferred that the contact reaction be performed in a solvent which is soluble to the compounds for the pre-contact treatment exemplified above, namely, such an aromatic hydrocarbon (usually having 6 to 12 carbon atoms) as benzene, toluene, xylene or ethylbenzene. The ratio between the inorganic compound carrier and/or the particulate polymer carrier.and the pre-contact compound is not specially limited as long as the object of the present invention is not impaired, but usually the pre-contact compound is used in an amount of 1 to 10,000 mmols, preferably 5 to 1,500 mmols, (provided the concentration of Al atoms in the case of a modified aluminum compound), based on 100 g of the carrier.

For example, when 1 mole of a modified Al compound which has two Al atoms in the molecule is contacted with the carrier, the mole number used is calculated as two moles (not 1 mole).

The transition metal catalyst component used for preparing the specific ethylene/$\alpha$ -olefin copolymer of the present invention is obtained by contacting the above components together. How to contact the components is not specially limited. Usually, the components are contacted together in an atmosphere of an inert gas such as nitrogen or argon, in the presence of a liquid inert hydrocarbon, for example an aromatic hydrocarbon (usually having 6 to 12 carbon atoms) such as benezene, toluene, xylene or ethylbenzene or an aliphatic or alicyclic hydrocarbon (usually having 5 to 12 carbon atoms such as heptane, hexane, decane, dodecane or cyclohexane, with or without stirring. In this case, the contact treatment is preferebly performed at a temperature of usually -100°C to 200°C, preferably -50°C to 100°C , for 30 minutes to 50 hours, preferably 1 to 24 hours. In the case where the components are contacted in an inert hydrocarbon solvent, the reaction product after completion of the entire contact reaction may be fed for polymerization as it is in the state of solution, or it may be once taken out as a solid catalyst component by a suitable means, e.g. precipitation or drying, and thereafter used in polymerization.

Of course, the contact reaction of the components may be conducted more than once.

As to the proportions of the components used, it is desirable that, for 1 mol of the transition metal compound (1), the organic compound of a Group I to Group III element in the Periodic Table be used in an amount of usually 0.01 to 100 mols, preferably 0.1 to 10 mols, more preferably 1 to 5 mols, and the organocyclic compound having at least two conjugated double bonds be used in an amount of usually 0.01 to 100 mols, preferably 0.1 to 10 mols, more preferably 0.5 to 2 mols. Further, it is desirable that, for 100 g of the inorganic compound carrier or particulate organic polymer carrier (4), a transition metal concentration ($Me^1$) be in the range of usually 0.01 to 500 mmols, preferably 0.05 to 200 mmols, more preferably 0.1 to 20 mmols.

The modified organoaluminum compound used in combination with the transition metal catalyst component described above usually contains in the molecule usually 1 to 100, preferably 1 to 50, Al-O-Al bonds. Although how to prepare it is not specially limited, it is usually the reaction product of an organoaluminum compound and water. The reaction of an organoaluminum compound and water is carried out usually in an inert hydrocarbon. As examples of such inert hydrocarbon there are mentioned aliphatic, alicyclic and aromatic hydrocarbons such as pentane, hexane, cyclohexane, methylcyclohexane, benzene, toluene and xylene, with alicyclic and aromatic hydrocarbons being preferred.

The organoaluminum compound referred to above means a compound represented by the general formula $R_nAlX_{3-n}$ where R is a hydrocarbon group such as an alkyl, alkeny, aryl or aralkyl group having 1 to 18 preferably 1 to 12, carbon atoms, X is a hydrogen atom or a halogen atom, and n is an integer of $1 \leqq n \leqq 3$. Trialkylaluminum is preferred. As examples of the alkyl group in such trialkylaluminum there are mentioned methyl, ethyl, propyl, isopropyl, butyl, isobutyl, pentyl, hexyl, octyl, decyl and dodecyl, with methyl being particularly preferred.

The reaction ratio (water/Al mol ratio) of water and the organoaluminum compound is in the range of usually 0.25/1 to 1.2/1, preferably 0.5/1 to 1/1, the reaction temperaure is in the range of usually -70°C to 100°C , preferably -20°C to 20°C , and the reaction time is usually 5 to 24 hours, preferably 5 to 10 hours. As the water to be used in the reaction, there also may be used water of crystallization contained, for example, in a copper sulfate hydrate or an aluminum sulfate hydrate, in addition to the ordinary water. Particularly preferred examples of the modified organoaluminum compound are methylaluminoxane, ethylaluminoxane, propylaluminoxane and butylaluminoxane.

The specific ethylene/$\alpha$ -olefin copolymer of the present invention is prepared by copolymerizing ethylene and an $\alpha$ -olefin in the presence of the transition metal catalyst component and a promotor typified by the above modified organoaluminum compound. The catalyst component and the promotor are fed into the polymerization system separately or in a premixed state. The ratio of the transition metal catalyst component and the promotor is not specially limited, but in the case of using the modified organoaluminum compound as the promotor, a suitable ratio of the two is selected in such a manner that an atomic ratio of aluminum in the modified organoaluminum compound to the transition metal in the catalyst component is in the range of 1 to 100,000, preferably 5 to 1,000.

As to these components of the catalyst, concrete descriptions are found in Japanese Patent Application Nos. 183271/91, 183272/91, 276672/91, 276673/91, 323848/91, 40047/92 and 40047/92.

As to the ratio of the amount of ethylene and that of $\alpha$ -olefin to be fed in the copolymerization of the two, a suitable ratio is selected so as to afford the specific ethylene/ $\alpha$ -olefin copolymer of the present invention. It is desirable that the proportion of the $\alpha$ -olefin be set usually at 40 mol% or less, preferably 30 mol% or less, more preferably 20 mol% or less. In a range not impairing the object of the present invention, a small amount of diene may also be fed at the same time.

The polymerization reaction may be carried out in any form of slurry polymerization, solution polymerization and vapor phase polymerization, in the presence of the catalyst described above, with slurry polymerization or vapor phase polymerization being particularly preferred. The polymerization is performed in a substantially oxygen-and water-free state and in the presence or absence of an inert hydrocarbon solvent selected from such aliphatic hydrocarbons as hexane and heptane, such aromatic hydrocarbons as benzene, toluene and xylene and such alicyclic hydrocarbons as cyclohexane and methylcyclohexane.

Conditions for the polymerization are not specially limited, but usually involve a temperature in the range of 20° to 200°C , preferably 50° to 100°C , a pressure in the range of atmospheric pressure to 70 kg/cm$^2$G, preferably atmospheric pressure to 20 kg/cm$^2$G, and a polymerization time in the range of 5 minutes to 10 hours, preferably 5 minutes to 5 hours. Adjustment of the molecular weight can be done to some extent by changing polymerization conditions such as polymerization temperature and catalyst mol ratio, but the addition of hydrdgen into the polymerization reaction system is more effective for this purpose. Further, the polymerization may be performed as a multi-stage polymerization of two or more stages involving different hydrogen concentrations and polymerization temperatures.

Although the specific ethylene/$\alpha$ -olefin copolymer of the present invention is prepared by the manufacturing method exemplified above, there is made no limitation to such method.

In comparison with the conventional linear low-density polyethylenes, the specific ethylene/$\alpha$ -copolymer of the

present invention is superior in optical properties such as transparency, moldability such as fluidity, mechanical properties such as impact resistance, tensile strength and tear strength, and low-temperature heat sealability, and possesses these superior in a well-balanced state. Further, as a result of our study, the ethylene/$\alpha$ -olefin copolymer of the invention proved to be a novel copolymer having specific molecular weight distribution characteristic, DSC melting point characteristic, branching degree characteristic and density. Therefore, the copolymer of the invention is applicable to various uses according to such molding methods as inflation molding, extrusion, injection molding and blow molding. Particularly, it is suitable for films for which transparency is important.

Conventional ethylene/$\alpha$ -olefin copolymers are lowered in density generally utilizing a crystal impeding effect of short-chain branches caused by the introduction of $\alpha$ -olefin. The ethylene/$\alpha$ -olefin copolymer of the present invention is characterized by being small in the number of branches per 1,000 carbon atoms and large in the degree of lowering of density, as compared with such conventional copolymers.

Further, the copolymer of the present invention may be mixed with other thermoplastic resins, for example, conventional linear (very) low-density polyethylenes, high pressure process low-density polyethylenes, medium-density polyethylenes, or olefin resins of 3 or more carbon atoms, e.g. polypropylene, or various rubbers, including ethylene propylene rubber. Of course, various fillers may be incorporated in the copolymer of the invention, such as, for example, antioxidants, antistatic agents, nucleating agents, dyes, pigments, lubricants and anti-blocking agents.

[Details of Measuring Methods]

Mw/Mn

Determined using a gel permeation chromatograph (GPC) Type 150C (a product of Waters Co.), a GMH-6 column (a product of Toyo Soda Manufacturing Co.), o-dichlorobenzene as solvent, under the conditions of temperature 135°C , flow rate 1.0 ml/min., concentration 0.5 wt%, feed 150 $\mu$l, calibration curve, linear polyethylene, and detector IR 2940 cm$^{-1}$.

Degree of Branching by $^{13}$C-NMR Method

Determined by $^{13}$C-NMR in accordance with the method described in J.C. Randall et al., Chemical Physics C29(2 & 3), 201-317 (1987) and Macromolecules, 21. $^{13}$NMR was measured using GX-270 (a product of Japan Electron Optics Laboratory Co.) and o-dichlorobenzene/deuterated benzene as solvent, under the conditions of concentration 0.2 g/3 ml and measurement temperature 120°C.

N Value

Determined from a shear rate ratio (the following equation) of copolymer at two load points of 20 kgf and 150 kgf, using a flow tester CFT-500 (a product of Shimadzu Seisakusho Ltd.), under the conditions of resin temperature 190°C , die diameter 2 mm and lenth 40 mm:

$$\text{N value} = \frac{\log (\tau^{150}/\tau^{20})}{\log (150/20)}$$

$$\left[ \begin{array}{l} \gamma^{150} : \text{shear rate (sec}^{-1}) \text{ at a load of 150 kgf} \\ \gamma^{20} : \text{shear rate (sec}^{-1}) \text{ at a load of 20 kgf} \end{array} \right]$$

Melting Point Peak

5 mg of a sample was melted at 180°C for 3 minutes, then the temperature was decreased to 0°C at a rate of 10 °C /min., then after holding the sample at 0°C , the temperature was raised to 180°C at a rate of 10°C /min., and a melting point was measured, using a differential scanning calorimeter (DSC).

Haze

Determined according to JIS K7105. A pressed sheet specimen of $0.5 \pm 0.01$ mm was prepared (after maintaining at a heating temperature of 180°C for 5 minutes, a pressure of 50 kgf was applied at the same temperature over a 5 minute period to form into sheet, followed by cooling to room temperature at a rate of 20°C/min.), and it was then determined for melting point using an integrating sphere type light ray transmittance measuring instrument (HGM-2DP, a product of Suga Tester Co.).

Temperature Rising Elution Fractionation (TREF)

TREF was performed in the following manner. Ethylene/$\alpha$ -olefin copolymer was dissolved in o-dichlorobenzene, then cooled, and formation of a polymer layer on diatomaceous earth, the temperature was raised continuously, and eluted component was detected continuously.

[Examples]

The following examples are given to illustrate the present invention more concretely, but it is to be understood that the invention is not limited at all by those examples.

[Physical Properties Measuring Methods]

Tensile Impact Test

According to ASTM D1822.

Heat Sealing Temperature

A 300 mm wide by 30 $\mu$m thick film was prepared using an inflation molding machine for linear low-density polyethylenes under the conditions of resin temperature 200°C , extruded resin quantity 20 kg/h, die diameter 100 mm and pip cap 2 mm.

The temperature at which a peeling test strength of 300 gf was obtained under the conditions of sealing pressure 2 kg/cm$^2$ and sealing time 1 second, using a heat sealer manufactured by Tester Industry Co., was assumed to be a heat sealing temperature.

The peeling test was conducted at a specimen width of 15 mm and a pulling rate of 300 mm/min.

[Preparation of Ethylene/$\alpha$ -olefin Copolymer]

Example 1

Preparation of Transition Metal Catalyst Component

(1) In a nitrogen atmosphere, 100 ml of purified toluene was placed into a three-necked 300 ml flask, then 3.2 g of tetrapropoxyzirconium, 5.1 g of ethylenebisindenylethane and 4.6 g of indene were added and stirring was conducted at room temperature for 1 hour. The resulting solution was cooled to -78°C , into which was then added 4 ml of triethylaluminum slowly. Thereafter, the temperature was raised and reaction was allowed to take place at room temperture for 30 minutes to obtain a toluene solution as a preliminary transition metal component. The concentration of this solution was 0.083 mmol/ml in terms of Zr.

(2) 10 g of Al$_2$O$_3$ (surface area: 300 m$^2$, average particle diameter: 60 $\mu$m) which had been calcined at 400°C for 5 hours was placed into a three-necked 300 ml flask, then 30 ml of the toluene solution prepared in the above step (1) was added and further added was 15 ml of purified toluene. Thereafter, the solvent was removed under nitrogen blow and reduced pressure to obtain 19 g of a solid transition metal catalyst component.

Copolymerization of Ethylene and $\alpha$ -Olefin

Copolymerization of ethylene and $\alpha$ -olefin was performed in the same way as in Example 1 to afford 37.2 g of a white polymer (catalytic efficiency: 31,000 g/g.Zr).

Physical properties of the copolymer thus obtained are as shown in Tables 1 and 2.

Comparative Example 1

Preparation of Transition Metal Catalyst Component

10 g of anhydrous magnesium chloride and 2 ml of t-butyl chloride were charged into a stainless steel pot having an internal volume of 400 ml and containing 25 stainless balls each 1/2 inch in diameter, in a nitrogen atmosphere, and ball milling was performed at room temperature in a nitrogen atmosphere for 6 hours. Thereafter 1 ml of titanium tetrachloride was added and ball milling was further conducted at room temperature in a nitrogen atmosphere for 16 hours to afford a solid transition metal catalyst component containing 39 mg of titanium per gram thereof.

Copolymerization of Ethylene and $\alpha$ -Olefin

A stainless steel 3-liter autoclave equipped with a stirrer was purged with nitrogen and then 200 g of dry NaCl was added into the autoclave. Further added were 10 mg of the above solid transition metal catalyst component and triethylaluminum in a concentration of 1 mmol, followed by heating to 60°C under stirring. Then, polymerization was conducted for 2 hours while maintaining the internal pressure at 9 kgf/cm$^2$ · G under the supply of a gaseous mixture of ethylene and butene-1 (butene-1/ethylene mol ratio = 0.25).

Thereafter, surplus mixed gas was discharged, followed by cooling, and the contents were withdrawn to obtain 44 g of a white polymer (catalytic efficiency: 110,000 g/g.Ti).

Physical properties of the copolymer thus obtained are as shown in Tables 1 and 2.

Comparative Example 2

There was used a high pressure process low-density polyethylene, Nisseki Rexlon® F-22 (a product of Nippon Petrochemicals Co., Ltd.).

Comparative Example 3

Preparation of Transition Metal Catalyst Component

In a nitrogen atmosphere, 100 ml of purified tetrahydrofuran (THF) was charged into a three-necked 300 ml flask equipped with a stirrer. After cooling to -195°C , 9.3 g of zirconium tetrachloride was added and the temperature was raised slowly to room temperature. Then, 40 mmols of lithium bisindenylethane in 70 ml of THF was added and reaction was allowed to take place at 15°C for 2 hours under stirring. Subsequently, hydrogen chloride gas was introduced and thereafter THF was removed to afford 5.5 g of a solid material as a transition metal component.

As a result of analysis, the thus-obtained solid material proved to be ethylenebisindenyldichlorozirconium.

This synthesis was conducted in accordance with Journal of Organometallic Chemistry, Volume 232, pp. 233-247 (1982).

Copolymerization of Ethylene and $\alpha$ -Olefin

Copolymerization of ethylene and $\alpha$ -olefin was carried out in the same way as in Example 1 to afford 107 g of a white polymer (catalytic efficiency: 89,000 g/g.Zr).

Physical properties of the copolymer thus obtained are as shown in Tables 1 and 2.

Comparative Example 4

A stainless steel 3-liter autoclave equipped with a stirrer was purged with nitrogen and then 200 g of dry NaCl was added into the autoclave. Further, 1.2 mg as zirconium of cyclopentadienyldichlorozirconium (98 %$^+$, a product of Aldrich Co.) and 13 ml of a solution in toluene containing 1 mmol/ml of methylaluminoxane were added, followed by heating to 40°C under stirring. Then, polymerization was conducted for 2 hours while maintaining the internal pressure at 9 kgf/cm$^2$ · G under the supply of a gaseous mixture of ethylene and butene-1 (butene-1/ethylene mol ratio = 0.25).

Thereafter, surplus mixed gas was discharged, followed by cooling, and the contents were withdrawn to afford 77 g of a white polymer (catalytic efficiency: 64,000 g/g.Zr).

Physical properties of the copolymer thus obtained are as shown in Tables 1 and 2.

Table 1

| | Resin Symbol | α-olefin Content | Melt Index 190°C. 2.16kg (g/10min) | Density g/cm³ | Mw/Mn | N value | DSC Peak temp (°C) | DSC Peak Number | Degree of Branching pc./1000c | Haze (%) | TREF Peak Temp. °C | TREF Amount of Component eluted at 90°C or higher | TREF Soluble Content at 25 °C or lower |
|---|---|---|---|---|---|---|---|---|---|---|---|---|---|
| Ex. 1 | D | 2.0 | 0.8 | 0.9256 | 5.6 | 1.85 | 106.3 98.0 | 2 | 9.8 | 56 | 67 74 | 0 | 0 |
| Com. Ex. 1 | F | 3.4 | 0.8 | 0.9197 | 4.4 | 1.45 | 125.4 | 1 | 17.0 | 74 | 92 | 8 | 7 |
| Com. Ex. 2 | G | --- | 1.0 | 0.9217 | 4.6 | 2.30 | 113.0 | 1 | 18.0 | 79 | 80 | 0 | 1.3 |
| Com. Ex. 3 | H | 7.5 | 0.9 | 0.9026 | 4.5 | 1.49 | 90.5 | 1 | 35.2 | 58 | 60 | 0 | 3 |
| Com. Ex. 4 | I | 6.9 | 2.5 | 0.9094 | 7.3 | 1.63 | 98.5 | 1 | 32.2 | 62 | 68 | 0 | 3 |

14

Table 2

|  | Resin Symbol | Impact Strength kgf-cm | Heat Sealing temp. °C |
|---|---|---|---|
| Ex. 1 | D | 510 | 121 |
| Com. Ex. 1 | F | 580 | 132 |
| Com. Ex. 2 | G | 180 | 120 |
| Com. Ex. 3 | H | 550 | 116 |
| Com. Ex. 4 | I | 550 | 112 |

**Claims**

1.  An ethylene/$\alpha$ -olefin copolymer which satisfies the following conditions (a) to (h):

    (a) a melt index of 0.01 to 100 g/10 min. as determined according to ASTM D1238-90b (190°C , load: 2.16 kg);
    (b) a density of 0.9256 to 0.940 g/cm$^3$;
    (c) a molecular weight distribution (ratio of weight average molecular weight to number averge molecular weight, Mw/Mn) in the range of 2.0 to 15 as determined by gel permeation chromatography (GPC);
    (d) an N value in the range of 1.25 $\leqq$ N value $\leqq$ 3.0 which N value is defined as follows:

    $$N \text{ value} = \frac{\log (\tau^{150}/\tau^{20})}{\log (150/20)}$$

    $$\left[ \begin{array}{l} \gamma^{150} : \text{shear rate (sec}^{-1}) \text{ at a load of 150 kgf} \\ \gamma^{20} \ : \text{shear rate (sec}^{-1}) \text{ at a load of 20 kgf} \end{array} \right]$$

    (e) the above Mw/Mn ratio satisfies the following expression: N value $\geqq$ 1.32 log (Mw/Mn) + 0.86
    (f) a melting point (peak temperature) in the range of 70° to 118°C as determined using a differential scanning calorimeter (DSC), which melting point is present in a singular or plural number;
    (g) a degree of branching, B, per 1,000 carbon atoms which satisfies the following expression:

    $$-710d + 662 \leqq B \leqq -725d + 686$$

    where d represents the density (g/cm$^3$) of the ethylene copolymer; and
    (h) the $\alpha$ -olefin which is copolymerized with ethylene is an $\alpha$ -olefin having 4 to 20 carbon atoms.

2.  An ethylene/$\alpha$ -olefin copolymer as set forth in claim 1 which is prepared by copolymerizing ethylene with the $\alpha$ -olefin in the presence of a catalyst comprising a transition metal catalyst component and a modified organoaluminum compound obtained by the reaction of an organoaluminum compound and water and containing Al-O-Al bond(s), said transition metal catalyst component being obtained by mutually contacting an organotransition metal compound of a Group IV metal in the Periodic Table, and at least one member selected from organocyclic compounds each having at least two conjugated double bonds and alkali metal salts thereof, and optionally an organic compound of a Group I to Group III element in the Periodic Table, an inorganic compound carrier or an organic polymer carrier.

3.  An ethylene/$\alpha$ -olefin copolymer as set forth in claim 1 wherein the melt index is 0.05 - 80 g/10min., the density is 0.9256 - 0.935 g/cm$^3$, the molecular weight distribution is 2.5 - 10, the N value is 1.4 - 2.7 and the peak temperature is 90° - 118°C , the degree of branching is -710d + 662 $\leqq$ B $\leqq$ -725d + 682.

**Patentansprüche**

1. Ethylen/$\alpha$-Olefin-Copolymer, welches die folgenden Bedingungen (a) bis (h) erfüllt:

(a) Schmelzindex von 0,01 bis 100 g/10 min, bestimmt gemäß ASTM D1238-90b (190 °C; Last 2,16 kg),
(b) Dichte von 0,9256 bis 0,940 g/cm$^3$,
(c) Molekulargewichtsverteilung (Verhältnis von gewichtsmittlerem Molekulargewicht zu zahlenmittlerem Molekulargewicht Mw/Mn) im Bereich von 2,0 bis 15, bestimmt mittels Gelpermeationschromatographie (GCP),
(d) N-Wert im Bereich von 1,25 $\leq$ N-Wert $\leq$ 3,0, wobei der N-Wert wie folgt definiert ist:

$$\text{N-Wert} = \frac{\log (\tau^{150}/\tau^{20})}{\log (150/20)}$$

[ $\gamma^{150}$: Schergeschwindigkeit (sec$^{-1}$) bei einer Beladung von 150 kgf
$\gamma^{20}$: Schergeschwindigkeit (sec$^{-1}$) bei einer Beladung von 20 kgf]

(e) das oben genannte Verhältnis Mw/Mn genügt folgendem Ausdruck: N-Wert $\geq$ 1,32 log (Mw/Mn) + 0,86
(f) Schmelzpunkt (Peaktemperatur) im Bereich von 70 bis 118 °C, bestimmt unter Anwendung der Differentialscanningkalorimetrie (DSC), wobei der Schmelzpunkt einzeln oder in Mehrzahl vorliegt,
(g) Verzweigungsgrad (B) pro 1000 Kohlenstoffatome, der dem folgenden Ausdruck genügt:

$$-710 + 662 \leq B \leq -752d + 686,$$

wobei d für die Dichte (g/cm$^3$) des Ethylen-Copolymeren steht, und
(h) das $\alpha$-Olefin, das mit Ethylen copolymerisiert wird, ist ein $\alpha$-Olefin mit 4 bis 20 Kohlenstoffatomen.

2. Ethylen/$\alpha$-Olefin-Copolymer gemäß Anspruch 1, das durch Copolymerisation von Ethylen mit einem $\alpha$-Olefin in Anwesenheit eines Katalysators erhalten wird, der eine Übergangsmetallkatalysatorkomponente und eine modifizierte Organoaluminiumverbindung, die durch Umsetzung einer Organoaluminiumverbindung mit Wasser erhalten wird und Al-O-Al-Bindung(en) aufweist, umfaßt, wobei die Übergangsmetallkatalysatorkomponente erhalten wird, indem man eine Organoübergangsmetallverbindung eines Metalls der Gruppe IV des Periodensystems mit mindestens einem Element, das aus cyclischen organischen Verbindungen mit je mindestens zwei konjugierten Doppelbindungen sowie deren Alkalimetallsalzen ausgewählt ist, sowie gegebenenfalls mit einer organischen Verbindung eines Elements der Gruppe I bis III des Periodensystems sowie einer anorganischen Trägerverbindung oder einem organischen Trägerpolymer wechselseitig in Kontakt bringt.

3. Ethylen/$\alpha$-Olefin-Copolymer gemäß Anspruch 1, bei dem der Schmelzindex 0,05 - 80 g/10 min und die Dichte 0,9256 - 0,935 g/cm$^3$ beträgt, die Molekulargewichtsverteilung bei 2,5 bis 10 liegt, der N-Wert 1,4 - 2,7 und die Peaktemperatur 90 - 118 °C ist und der Verzweigungsgrad -710d + 662 $\leq$ B $\leq$ -725d + 682 beträgt.

**Revendications**

1. Copolymère d'éthylène et d'$\alpha$-oléfine satisfaisant aux conditions suivantes (a) à (h) :

(a) un indice de fluidité de 0,01 à 100 g/10 mn tel que déterminé selon la norme ASTM D1238-90b (190°C, charge de 2,16 kg);
(b) une densité de 0,9256 à 0,940 g/cm$^3$;
(c) une distribution de poids moléculaire (rapport du poids moléculaire moyen en poids au poids moléculaire moyen en nombre, PMp/PMn) comprise dans la gamme de 2,0 à 15 telle que déterminée par chromatographie de perméation sur gel (GPC);
(d) une valeur N comprise dans la gamme de :

$$1,25 \leq \text{valeur N} \leq 3,0$$

laquelle valeur N est définie comme suit :

$$\text{Valeur } N = \log (\gamma^{150}/\gamma^{20})/\log(150/20)$$

où $\gamma^{150}$ = taux de cisaillement (s$^{-1}$) à 190°C et à une charge de 150 kgf
et $\gamma^{20}$ = taux de cisaillement (s$^{-1}$) à 190°C et à une charge de 20 kgf

(e) le rapport PMp/PMn ci-dessus satisfait à la relation suivante :

$$\text{valeur } N \geq 1{,}32 \log (\text{PMp/PMn}) + 0{,}86$$

(f) un point de fusion (température de pic) compris dans la gamme de 70°C à 118°C tel que déterminé avec un calorimètre différentiel à balayage (CDB), ce point de fusion étant unique ou multiple;
(g) un degré de ramification, B, pour 1000 atomes de carbone qui satisfait à la relation suivante :

$$-710d + 662 \leq B \leq -725d + 686$$

dans laquelle d représente la densité en g/cm$^3$ du copolymère d'éthylène; et
(h) l'$\alpha$-oléfine qui est copolymérisée avec l'éthylène est une $\alpha$-oléfine ayant de 4 à 20 atomes de carbone.

2. Copolymère d'éthylène et d'$\alpha$-oléfine selon la revendication 1, qui est préparé par la copolymérisation d'éthylène avec l'$\alpha$-oléfine en présence d'un catalyseur comprenant un composant catalytique à base de métal de transition et un composé organoaluminique modifié obtenu par la réaction d'un composé organoaluminique et d'eau et contenant une ou plusieurs liaisons Al-O-Al, ce composant catalytique à base de métal de transition étant obtenu par mise en contact mutuel d'un composé organique d'un métal de transition d'un métal du Groupe IV du Tableau de classification périodique des éléments et d'au moins un composé choisi parmi des composés organocycliques ayant chacun au moins deux doubles liaisons conjuguées et leurs sels de métaux alcalins, et éventuellement d'un composé organique d'un élément des Groupes I à III du Tableau de classification périodique des éléments, d'un support à base de composé inorganique ou d'un support à base de polymère organique.

3. Copolymère d'éthylène et d'$\alpha$-oléfine selon la revendication 1, dont l'indice de fluidité est de 0,05 à 80 g/10 mn, la densité est de 0,9256 à 0,935 g/cm$^3$, la distribution de poids moléculaire est de 2,5 à 10, la valeur N est de 1,4 à 2,7, la température de pic est de 90°C à 118°C et le degré de ramification B est tel que :

$$-710d + 662 \leq B \leq -725d + 682$$